# EUROPEAN PATENT SPECIFICATION

(11) **EP 3 605 795 B1**
(45) Date of publication and mention of the grant of the patent: **11.11.2020**
(21) Application number: 19197988.9
(22) Date of filing: 21.02.2012
(51) Int. Cl.: H02K 1/18, H02K 5/04

(54) **STATOR FIXATION STRUCTURE AND DRIVING UNIT**
STATORBEFESTIGUNGSSTRUKTUR UND ANTRIEBSEINHEIT
STRUCTURE DE FIXATION DE STATOR ET UNITÉ D'ENTRAÎNEMENT

(30) Priority: 09.03.2011 JP 2011051685
(43) Date of publication of application: 05.02.2020
(62) Divisional of application: 12755553.0
(73) Proprietor: Yamaha Motor Electronics Co., Ltd., Shuchi-gun Shizuoka 437-0292 (JP)
(72) Inventor: SHIRAISHI, Tomonari, Shizuoka, 437-0292 (JP); NAGATA, Toshihiko, Shizuoka, 437-0292 (JP); OOTANI, Toshihide, Shizuoka, 437-0292 (JP); KOBAYASHI, Hideyuki, Shizuoka, 437-0292 (JP)
(74) Representative: Zimmermann, Tankred Klaus

(56) References cited:
- JP-A- 2008 271 747
- JP-A- 2010 178 469
- US-A- 5 315 200
- US-A1- 2009 121 570

## Description

### Technical Field

This invention relates to a stator structure and a driving unit.

More particularly, this invention is directed to techniques of fixing a stator to a housing.

### Background Art

Conventionally, a motor or a generator has been known including a stator, a rotor in the interior of the stator, and a case accommodating the stator and the rotor. The stator is fixed to the case by means of bolts or screws. See, for example, Japanese Patent Publication No. H06-70523A. Alternatively, as is also known, the stator may be adhered to the case by an adhesive.

US 5,315,200 discloses an electric motor including a rotor mounted on an axle, a stator and a support chassis. The support chassis includes a first cover and housing and a second cover. The stator is secured in position by means of a wave spring disposed between the end of the stator and the support chassis, and a fastener for compressing the wave spring.

### Summary of Invention

The invention is defined in claim 1.

### Technical Problem

Examples of conventional art with the construction as above, however, have the following drawbacks. Fixing the stator to the case by means of bolts or the like takes much time for the assembly since the bolts require fastening upon fixing the stator. This may cause an inconvenience. Moreover, portions for fixing the stator by means of bolts or the like are required, and such portions may lead to another inconvenience in terms of a complex construction. On the other hand, fixation via an adhesive may lead to an inconvenience of increased time for assembly including a cure time for the adhesive. Moreover, the working efficiency easily decreases due to adhesion of the adhesive to a hand or the like of an operator. Thus, an inconvenience may also occur.

This invention has been made regarding the state of the art noted above, and its object is to provide a stator fixation structure and a driving unit with a simple construction allowing fixation of the stator in a shorter period of time.

### Solution to Problem

To fulfill the above object, this invention provides the following construction. One embodiment of this invention discloses a stator structure. The stator structure includes a stator; a
housing including a tubular section, the stator accommodated in the tubular section; a cover coupled to the housing for blocking an upper opening of the tubular section; and a bent wire rod composed of a wire for pressing the stator against the tubular section, the bent wire rod being arranged between a top face of the stator and a rear face of the cover in a compressed state so as to be deformed along an axis of the stator.
The bent wire rod has a substantially annular shape with an opened portion when seen along the axis, and includes projections projecting upward along the axis and depressions projecting downward along the axis, the projections and depressions being arranged alternately and successively, the bent wire rod being arranged such that the projections are in contact with the rear face of the cover and the depressions are in contact with the top face of the stator.

The bent wire rod is composed of a wire, and has a substantially annular shape with an opened portion when seen along the axis.

Examples of the substantially annular shape include a shape composed of only curves such as a circle or an ellipse, a shape composed of straight lines such as a polygon, and a shape composed of straight lines and curves.

The bent wire rod includes alternate projections and depressions being arranged successively, the projections projecting upward along the axis and the depressions projecting downward along the axis. In the
embodiment of this invention, it is assumed that a direction along the axis of the stator from the stator toward the cover is an upward direction and a direction opposite thereto is a downward direction. Accordingly, when seen around the axis, the bent wire rod has a zigzag or a wavy shape with
the alternate projections and depressions being arranged successively along the axis. The connection of the projection and depression may be linear or curved.

When the bent wire rod is provided between the stator and the cover, the projections contact the rear face of the cover and the depressions contact the top face of the stator. In addition, the bent wire rod is compressingly deformed along the axis. Accordingly, the bent wire rod generates an elastic force extending along the axis. The elastic force causes the stator to undergo downward force along the axis. Then the stator is pressed against the tubular section to be held in the housing. This allows for a suitable suppression of a shifting of the stator along the axis.

The elasticity deformable bent wire rod allows to absorb variations in the dimension of the stator or the cover along the axis, and thus securely presses the stator against the tubular section.

The stator structure mentioned above requires no bolt or the like for fixing the stator, thereby achieving a simple construction. In addition, the stator is fixed to the housing by merely providing the bent wire rod between the stator and the cover, resulting in an enhanced working efficiency. The stator may be fixed in a shorter period of time.

One of the directions along the axis is defined as an upward direction and the other as a downward direction. The direction along the axis, however, is not limited to a specific direction, such as a vertical direction. That is, the stator may be disposed in any direction and attitude, and accordingly the axis may be in any direction.

In the embodiment of this invention mentioned above, it is preferable that the bent wire rod includes a plurality of corners and a plurality of straight portions so as to be substantially polygonal when seen along the axis, the straight portion connecting the adjacent corners with each other. The bent wire rod has a substantially polygonal outer shape when seen along the axis. The corner where the wire rod is bent corresponds to a vertex of the substantial polygonal shape. The straight portion where the wire rod extends substantially linearly corresponds to a side of the substantial polygonal shape. The bent wire rod with the straight portions may be formed with more ease than that having an outer shape with only curves.

In the embodiment of this invention mentioned above, the corners are preferably formed at the projections or the depressions. For instance, when the corners are located at the same positions as the projections, the wire rod is bent at one of the projections in a direction where bending following the projections and bending following the corners are combined. When the corners are located at the same positions as the depressions, the wire rod is bent at one of the depressions in a direction where bending following the depressions and bending following the corners are combined. Every corner is formed with the projection or the depression, and thus the corners serve as the projections or the depressions. The number of bent portions of the wire rod is independent of the number of corners, and thus the total number of the bent portions is defined by the total number of the projections and depressions. Consequently, the formation of the bent wire rod may be facilitated.

In the embodiment of this invention mentioned above, the projections and the depressions are preferably bent such that an outer shape of the bent wire rod is of substantially polygonal shape with the projections and the depressions serving as vertices when seen along the axis. In addition, the bent wire rod preferably includes straight portions each connecting the adjacent projection and depression. The projections and depressions are bent so as to project along the axis and to be a vertex of the substantial polygon when seen along the axis. As a result, the bent wire rod has essentially a uniform or symmetrical shape regardless of an upside-down rotation. For instance, a portion projecting in one direction along the axis may serve as a projection or a depression. This allows reducing the work loads of assembling the bent wire rod.

In the embodiment of this invention mentioned above, it is preferable that the bent wire rod, when not being assembled, has a dimension larger than the external diameter of the stator when seen along the axis, and, when assembled, is deformed so as to have a dimension smaller than the external diameter of the stator. The bent wire rod is partially open when seen along the axis. Consequently, the bent wire rod is deformable radially and inwardly relative to the axis so as to have a smaller outer shape. In addition, the bent wire rod has a substantially polygonal shape larger than the external diameter of the stator when seen along the axis. Accordingly, when the bent wire rod is assembled while being deformed so as to have a smaller outer shape, the bent wire rod may contact a peripheral edge of the stator.

In the embodiment of this invention mentioned above, the bent wire rod is preferably composed of a wire rod having a circular cross-section. The wire rod having the circular cross-section may be bent in any directions. Consequently, the formation of the bent wire rod can be facilitated.

In the embodiment of this invention mentioned above, the cover preferably includes a side wall and a protrusion. The side wall is formed on a rear face of the cover in a peripheral direction around the axis, and is in contact with the bent wire rod to receive an elastic force radially and outwardly relative to the axis that is generated by the bent wire rod. The protrusion projects from the side wall radially and inwardly relative to the axis to contact the projection and receive an upward elastic force along the axis that is generated by the bent wire rod. Accordingly, the radial and outward elastic force of the bent wire rod expands the bent wire rod along the periphery of the side wall, and thus the bent wire rod itself rests on the side wall. This facilitates resting of the bent wire rod on the cover. In addition, the protrusion receiving the upward elastic force along the axis projects from the side wall, whereby the bent wire rod may be deformed compressingly while resting on the side wall. Consequently, coupling of the cover to the housing permits the bent wire rod to be compressingly deformed in a given position at one stroke. As noted above, the stator may be fixed to the housing with high efficiency.

In the embodiment of this invention mentioned above, the side wall preferably has an internal diameter slightly larger than an external diameter of the stator. This allows the upper portion of the stator to be accommodated partially inside the side wall. As noted above, the partial accommodation of the stator in the cover allows for a size reduction.

In the embodiment of this invention mentioned above, the protrusion is preferably inclined downwardly along the axis radially and inwardly. A recess in which the projections are held is preferably provided between the protrusion and the side wall. The protrusion pressed by the bent wire rod upwardly along the axis is inclined downwardly along the axis radially toward the inside. Thus, the protrusion suppresses shifting of the bent wire rod (projection) radially towards the inside. That is, a contact position of the bent wire rod with the cover allows suitably suppressing the radial shifting of the bent wire rod.

In the embodiment of this invention mentioned above, the stator preferably includes a stator core and a coil wound around the stator core. The bent wire rod preferably contacts a top face of the stator core directly. The stator core has a rigidity higher than that of the coil. The bent wire rod directly contacts the stator core having the relatively higher rigidity, thereby achieving an accurate pressing of the stator.

In the embodiment of this invention mentioned above, the stator preferably further includes a restricting element disposed on the top face of the stator core and inside from an outer peripheral edge of the stator core for restricting shifting of the bent wire rod radially and inwardly. The restricting element allows suitably suppressing the radial shifting of the contact position of the bent wire rod to the stator. In other words, shifting of the depressions of the bent wire rod may to be suppressed suitably.

In the embodiment of this invention mentioned above, the stator preferably includes an insulated bobbin disposed between the stator core and the coil for covering the stator core. The restricting element is preferably integrated with the insulated bobbin. The insulated bobbin serves as the restricting element, resulting in a simplified structure.

Another embodiment of this invention discloses a driving unit. The driving unit includes a motor configured to generate power, the motor including a rotor and a stator outside of the rotor; a housing including a tubular section, the motor accommodated in the tubular section; a cover coupled to the housing for blocking an upper opening of the tubular section; and a bent wire rod composed of a wire rod, the bent wire rod being disposed between a top face of the stator and a rear face of the cover in a compressed state so as to be deformed along an axis of the stator to press the stator against the tubular section. The bent wire rod is substantially annular having an opened portion when seen along the axis, and includes projections projecting upward along the axis and depressions projecting downward along the axis, the projections and depressions being arranged alternately and successively, the bent wire rod being arranged such that the projections are in contact with the rear face of the cover and the depressions are in contact with the top face of the stator.

The driving unit according to the embodiment of this invention uses the stator structure mentioned above. Consequently variations in the dimension of the stator or the cover along the axis may be absorbed, thereby suitably suppressing the shifting of the stator along the axis. In addition, the construction of the driving unit may be compact. Moreover, the stator may be fixed to the housing by merely arranging the bent wire rod between the stator and the cover, resulting in an enhanced working efficiency and an assembly in a shorter period of time. Accordingly, an efficient assembly of the driving unit can be achieved.

In the embodiment mentioned above of this invention, the driving unit is mountable on a bicycle. The housing further includes a crankshaft chamber into which a crankshaft of the bicycle is inserted. The motor generates power for assisting a pressure on pedals coupled to the crankshaft. Such a construction is preferred as the pedals of the bicycle may often contact the ground first. The crankshaft is coupled the pedals. Accordingly, in the driving unit mounted on the bicycle, a shock may be given directly to the housing, and in addition, a shock may be given directly into the inside of the driving unit (crankshaft chamber) via the crankshaft. In the latter case, a stronger force is applied to the stator along the axis. On the other hand, the driving unit in the embodiment of this invention uses the stator structure mentioned above, and thus a shifting or a disconnection of the stator along the axis may be suitably suppressed. Consequently, the driving unit of this invention is suitably applicable to bicycles.

### Advantageous Effects Of Invention

In the stator structure according to the embodiment of this invention, the projections of the bent wire rod contact the rear face of the cover, and the depressions of the bent wire rod contact the top face of the stator. Moreover, the bent wire rod is compressingly deformed along the axis. This causes the bent wire rod to generate an elastic force extending along the axis. The elastic force exerts an upward force along the axis to the cover and a downward force along the axis to the stator. Thus, the stator is pressed against the tubular section so as to be held in the housing. Consequently, a shifting of the stator along the axis may be suppressed suitably.

In addition, the elastically deformable bent wire rod allows absorbing variations in the dimension of the stator or the cover along the axis, thereby achieving a suitable pressing of the stator against the tubular section.

The stator fixation structure as above uses no bolt or the like for fixing the stator, thereby achieving a simple construction. In addition, the stator is fixed to the housing by merely arranging the bent wire rod between the stator and the cover, resulting in an enhanced working efficiency. Also, the stator may be fixed in a shorter period of time.

The driving unit according to the embodiment of this invention uses the stator structure. Consequently, variations in the dimension of the stator or the cover along the axis can be absorbed, thereby achieving a suitable suppression of the shifting of the stator along the axis of the stator. Moreover, this provides for a simple construction of the driving unit. Furthermore, the stator may be fixed to the housing by merely providing the bent wire rod between the stator and the cover, resulting in an enhanced working efficiency and an assembly in a shorter period of time. Accordingly, an efficient assembly of the driving unit can be achieved.

### Brief Description Of Drawings

Figure 1 is an external view of a driving unit according to one embodiment of this invention.
Figure 2 is a plan view of a principal part of the driving unit.
Figure 3 is a sectional view along the line A-A in Figure 1.
Figure 4 is a perspective view of a principal part of a housing.
Figure 5 is a perspective view of a principal part of a stator.
Figure 6 and 7 are enlarged sectional views each illustrating a stator fixation structure.
Figure 8 is an exploded perspective view of a principal part of the driving unit.
Figure 9 is an external perspective view of a spring pin.
Figure 10 is a perspective view of a rear face of a cover.
Figure 11 is a perspective view of a bent wire rod.
Figure 12 is a view of the bent wire rod, wherein Figure 12A illustrates a partial side view of the bent wire rod seen from a direction orthogonal to an axis, and wherein Figure 12B illustrates a plan view of the bent wire rod seen along the axis.
Figure 13 is a left side view of a bicycle having the driving unit mounted thereon.

### Description of Embodiments

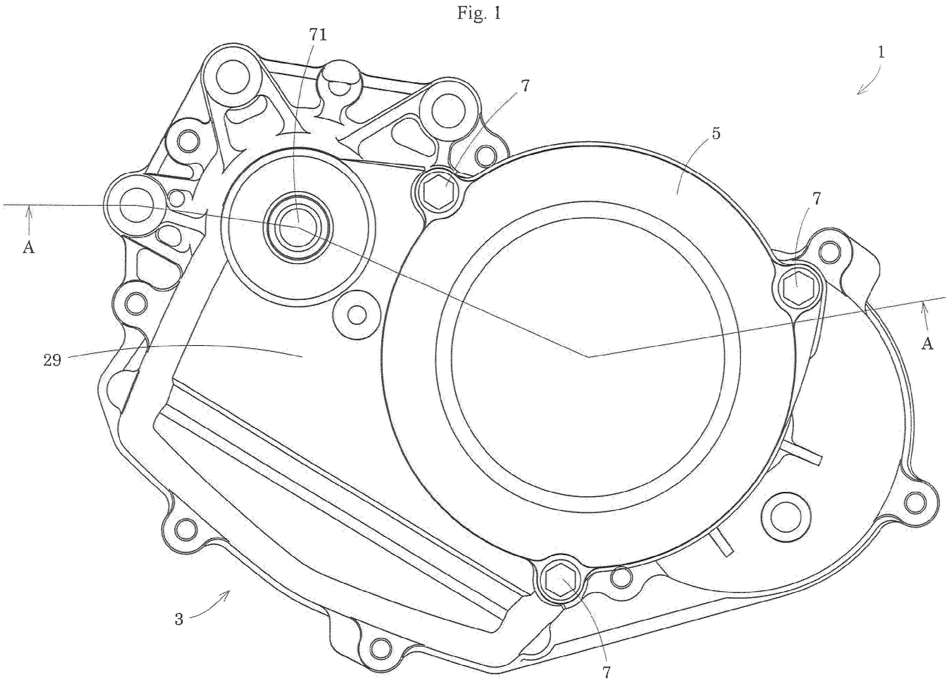

A description will be given hereinafter of embodiments of this invention with reference to drawings. A driving unit applicable to a bicycle is used for the description as one example of the embodiments. Figure 1 is an external view of a driving unit according to one embodiment of this invention.

### 1. Entire Construction of the Driving Unit

A driving unit 1 includes a housing 3 and a cover 5. The cover 5 is fastened to the housing 3 via bolts 7. A crankshaft 71 of a bicycle passes through the driving unit 1.

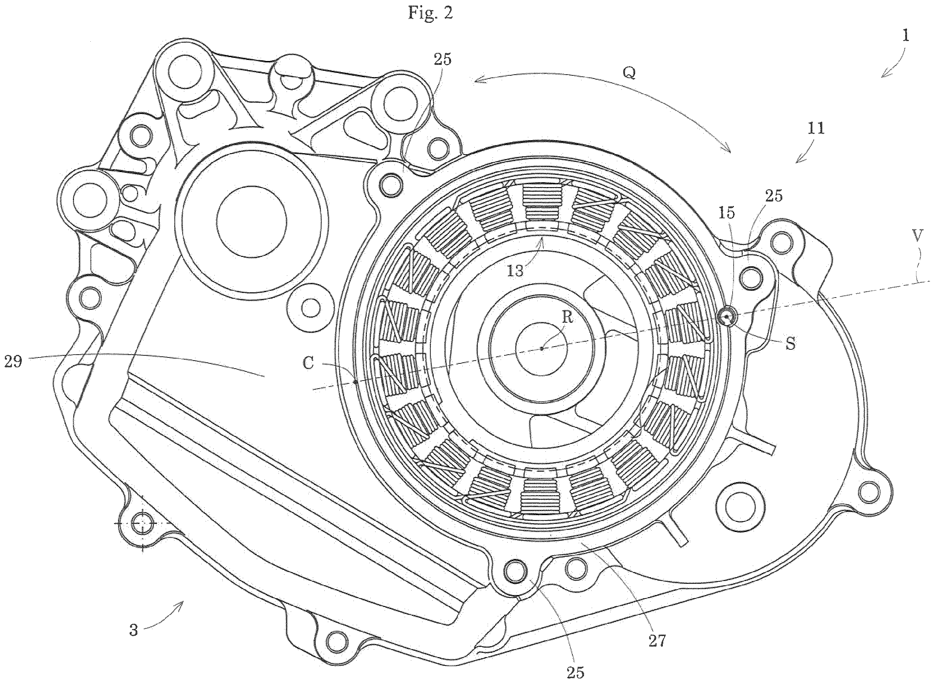

Figure 2 is a plan view of a principal part of the driving unit 1. In Figure 2, besides the cover 5 and the crankshaft 71 mentioned above, a rotor or the like is not shown. As illustrated, the housing 3 includes a tubular section 11 of substantially cylindrical shape. The tubular section 11 accommodates a stator 13. A spring pin 15 is pressed into a gap between the tubular section 11 and the stator 13.

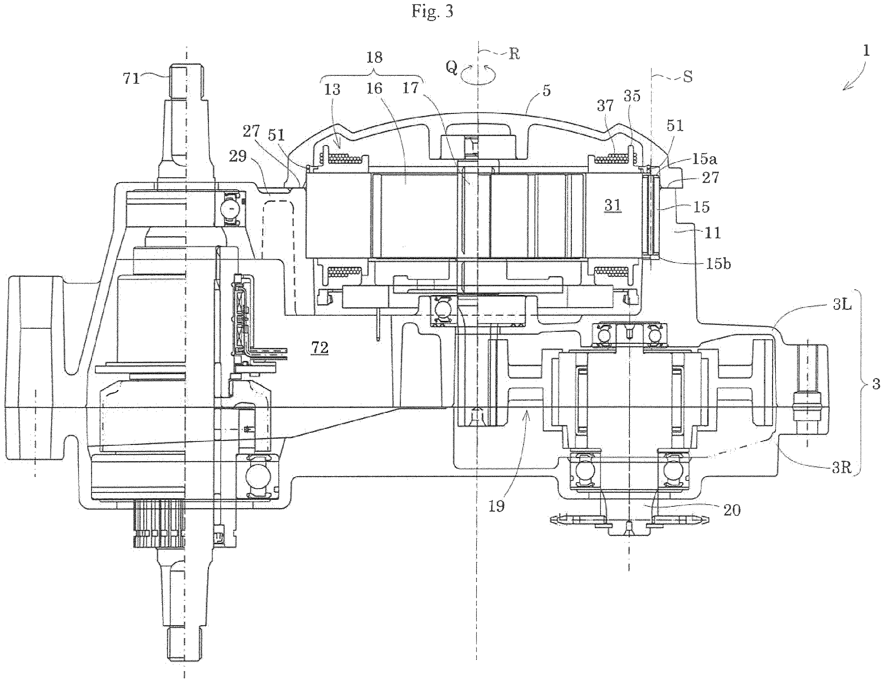

Reference is made to Figure 3. Figure 3 is a sectional view along the line A-A in Figure 1. As illustrated, a rotor 16 is disposed inside of the stator 13. The rotor 16 is connected to a rotary shaft 17 so as to rotate integrally therewith. The rotary shaft 17 is rotatably supported in the housing 3. The stator 13, the rotor 16, and the rotary shaft 17 constitute a motor 18 for generating power. The rotary shaft 17 is interlocked to an output shaft 20 via a gear unit 19 or the like. The output shaft 20 outputs power generated by the motor 18.

The cover 5 mentioned above closes an upper opening of the tubular section 11. The cover 5 contacts an upper end surface 27 of the tubular section 11. A bent wire rod 51 is arranged between the cover 5 and the stator 13 while being compressingly deformed.

The housing 3 includes a left case 3L and a right case 3R. The left and right cases are separable from each other. In the following, the description is made simply with respect to the housing 3 unless a difference needs to be made between the left case 3L and the right case 3R.

A description will be given hereinafter of each element. In the embodiment of this invention, the term "axis R" is used throughout the specification assuming that the axis R of the stator 13 substantially conforms to the central axis of the tubular section 11 for convenience.

In addition, in the embodiment of this invention, a direction along the axis of the stator 13 from the stator 13 toward the cover 5 is referred to as an "upward direction along the axis R" or "upward" for convenience. In addition, a direction opposite to the direction from the stator 13 toward the cover 5 is referred to as a "downward direction along the axis R" or "downward. For instance, an upper side of the plane of Figure 3 is referred to as an "upside direction along the axis R" or simply as "upside", whereas a lower side of the plane of the drawing as a "downside direction along the axis R" or simply as "downside". It is noted that this is not a limitation of a direction of the axis R to a specific direction such as a vertical direction. The stator 13 may be disposed in any directions and attitudes, and accordingly the axis R may extend in any directions. A direction around the axis R is referred to as a "peripheral direction Q".

### 2. Construction of the Housing

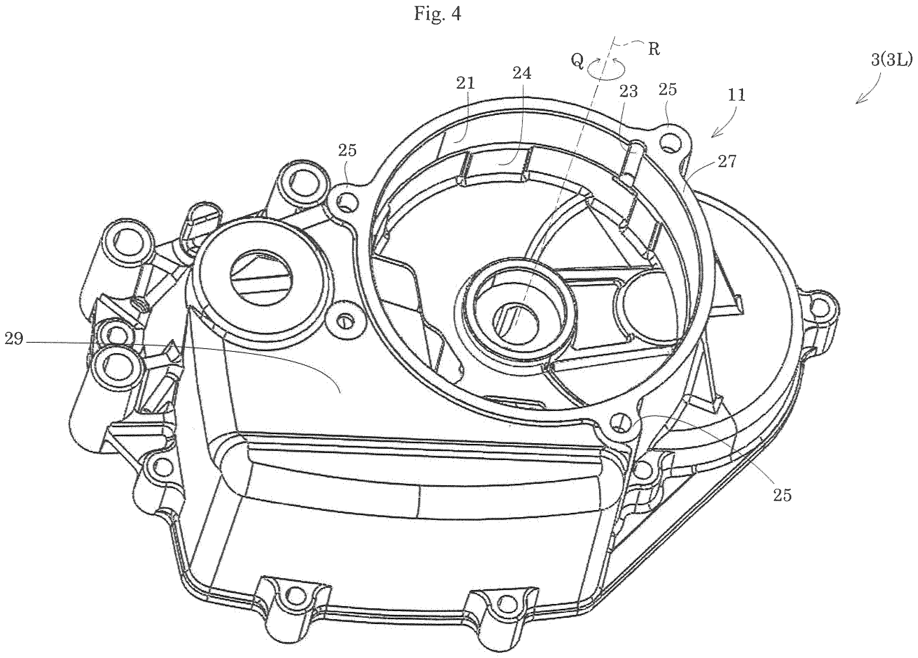

Figure 4 is a perspective view of a principal part of the housing 3. In Figure 4, only the left case 3L is illustrated and the right case 3R is omitted.

As illustrated, the tubular section 11 includes inside thereof an inner wall 21. The inner wall 21 has an internal diameter slightly larger than an external diameter of the stator 13, allowing accommodating the stator 13. The inner wall 21 includes a single first groove 23 formed thereon. In Figure 4, the first groove 23 is disposed at a position slightly different from that in Figure 2.

On lower ends of the inner wall 21 and the first groove 23, a flange 24 is provided which projects inwardly and radially relative to the axis R (hereinafter is abbreviated to "radially" where appropriate). The flange 24 has an internal diameter smaller than an external diameter of the stator 13. The flange 24 contacts the stator 13 at a top face thereof to support the stator 13.

The tubular section 11 further includes a plurality of (e.g., three) bosses 25 for connecting the cover 5. The housing 3 further includes a plate section 29 projecting externally from the outer wall of the tubular section 11. The plate section 29 serves as a wall forming a crankshaft chamber 72 into which the crankshaft 71 is inserted.

### 3. Construction of the Stator

As illustrated in Figure 3, the stator 13 includes a stator core 31, an insulated bobbin 35, and a coil 37. The insulated bobbin 35 covers the stator core 31. The coil 37 is composed of a winding wound around the stator core 31 over the insulated bobbin 35.

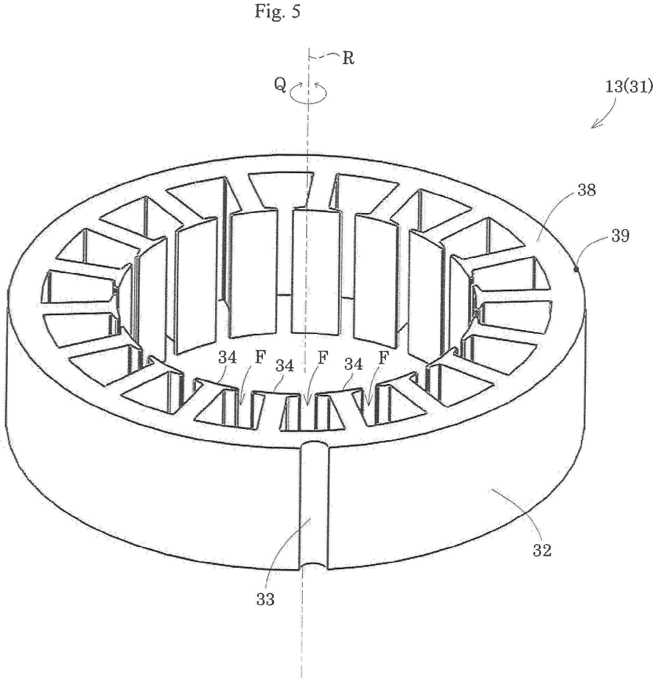

Figure 5 is a perspective view of a principal part of the stator. As illustrated, a second groove 33 is formed on an outer wall 32 of the stator core 31, the second groove 33 being substantially parallel to the axis R. The second groove 33 has substantially semicircle shape. The stator core 31 further includes a plurality of teeth 34. A slot F is formed between adjacent teeth 34. The second groove 33 is disposed radially outside of the slot F.

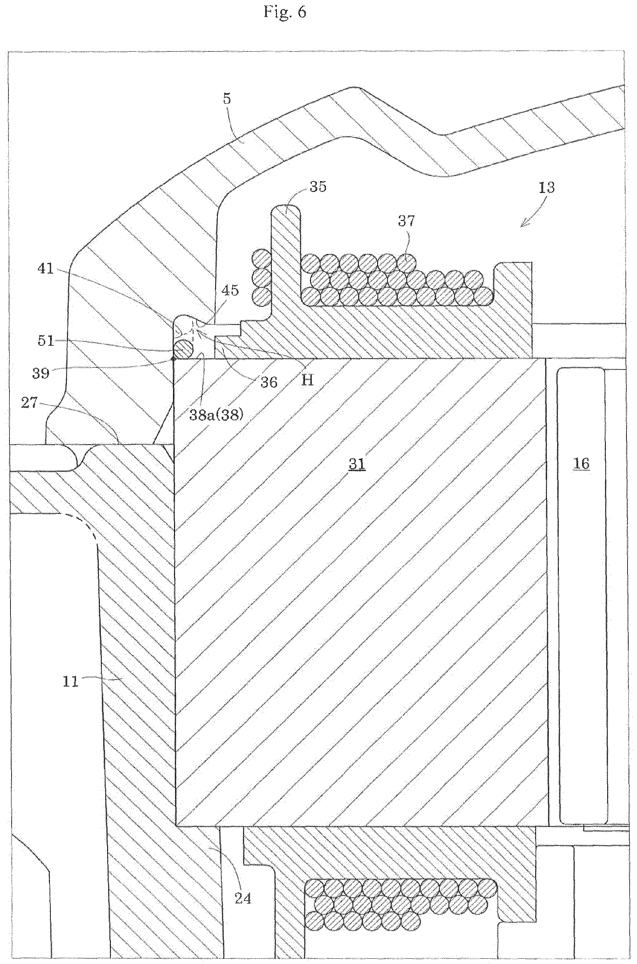

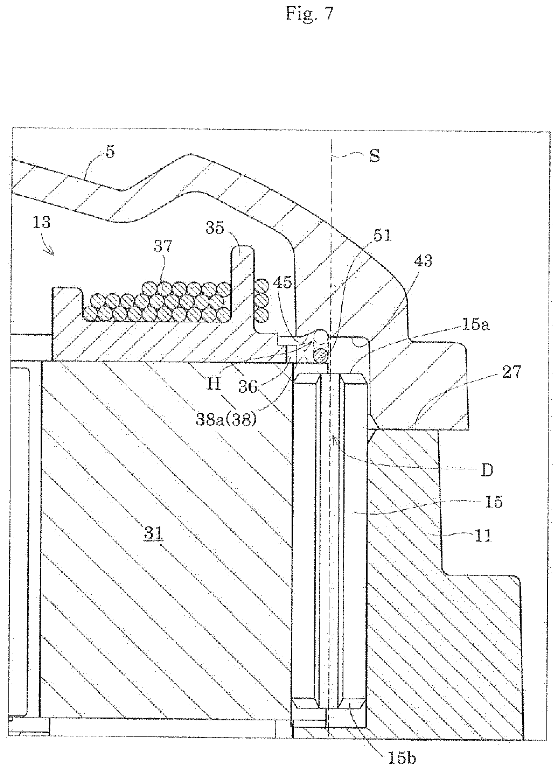

Figures 6 and 7 are each enlarged sectional views of the stator fixation structure. As illustrated, the insulated bobbin 35 includes a collar 36 extending radially and outwardly to cover the top face of the stator core 31. The collar 36 has a diameter slightly smaller than the external diameter of the stator core 31. Accordingly, a peripheral edge 38a of the top face 38 of the stator core 31 is exposed.

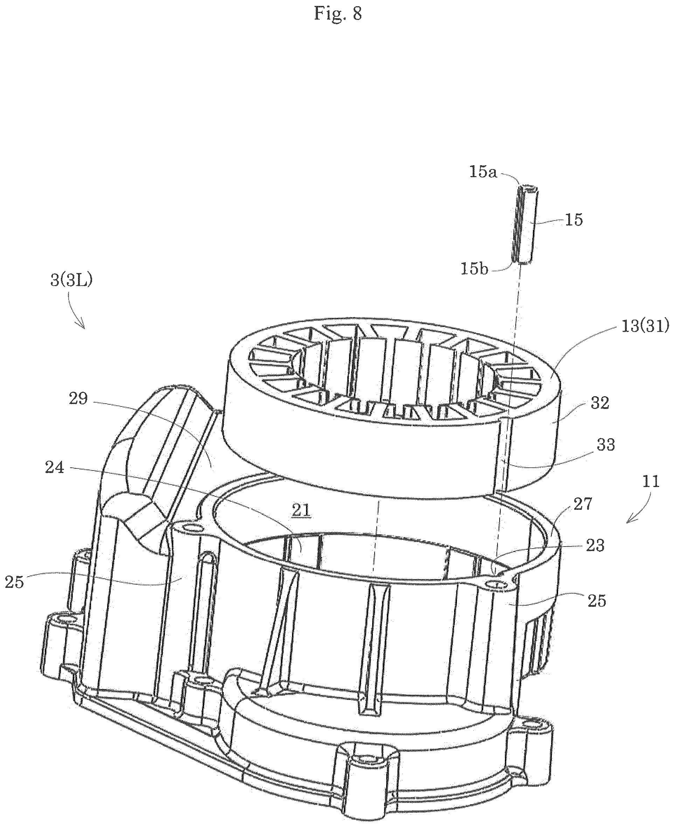

Figure 8 is an exploded perspective view of a principal part of the driving unit 1. As illustrated, the stator 13 is attached to the tubular section 11 such that the second groove 33 faces the first groove 23. This achieves the formation of a substantially circular gap by the first groove 23 and the second groove 33.

### 4. Construction of the Spring Pin

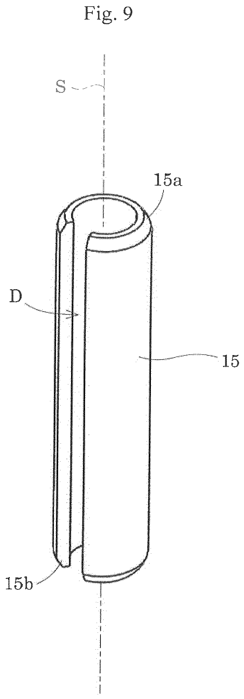

Figure 9 is an external perspective view of the spring pin 15. As illustrated, the spring pin 15 has substantially cylindrical shape, and includes a slit D parallel to a shaft axis S. An upper end 15a and a lower end 15b of the spring pin 15 are chamfered. The ends are each tapered. When the spring pin 15 is compressingly deformed radially and inwardly relative to the shaft axis S, the spring pin 15 exerts a elastic force radially and outwardly relative to the shaft axis S.

As illustrated in Figure 7, the spring pin 15 is pressed into the gap formed by the first groove 23 and the second groove 33.

As illustrated in Figure 2, the spring pin 15 pressed into the gap is kept compressingly deformed, thereby exerting an elastic force. The elastic force causes the spring pin 15 to press a part of the stator 13 (stator core 31) and to press the opposite part of the stator 13 against the inner wall 21 of the tubular section 11. Specifically, assuming that a direction from the shaft axis S of the spring pin 15 toward the axis R is a radial direction V and an intersecting point of the radial direction V and the inner wall 21 is a point C, the stator 13 comes into surface contact with the inner wall 21 within an area extending around the point C along the peripheral direction Q of the axis R.

The inner wall 21 being in surface contact with the stator 13 receives a load directed radially and outwardly relative to the axis R. This causes a friction force between the stator 13 and the inner wall 21. The friction force allows holding the stator 13. That is, shifting of the stator 13 along the axis R may be suppressed suitably.

### 5. Construction of the Cover

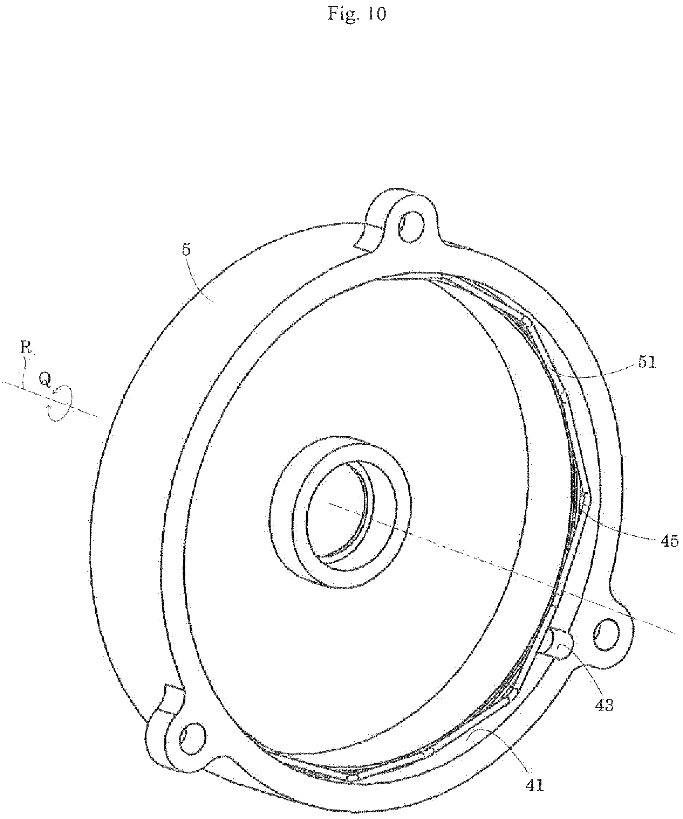

Reference is made to Figures 6, 7, and 10. Figure 10 is a perspective view of the rear face of the cover 5. The rear face of the cover 5 includes a side wall 41 formed thereon. The side wall 41 is formed in the peripheral direction Q of the axis R. The side wall 41 has an internal diameter slightly larger than the external diameter of the stator 13. The stator 13 (stator core 31) projecting from the tubular section 11 is accommodated inside the side wall 41. As noted above, the upper side of the stator 13 is partially accommodated in the cover 5, facilitating a reduction in size of the driving unit 1.

The side wall 41 includes a notch 43 formed thereon. The notch is disposed on an extended position of the first groove 23. As illustrated in Figure 7, the spring pin 15 is accommodated in the notch 43, the spring pin 15 projecting upward from the upper end surface 27 of the tubular section 11. The spring pin 15 has a length smaller than the dimension of the stator 13 along the axis R. Consequently, the spring pin 15 does not project upward over the stator 13 (stator core 31).

The cover 5 also includes a protrusion 45. The protrusion 45 projects radially and inwardly from an upper end of the side wall 41. The protrusion 45 is inclined downwardly along the axis R radially and inwardly. As a result, an annular recess (space) H is formed between the side wall 41 and the protrusion 45.

### 6. Construction of the Bent Wire Rod

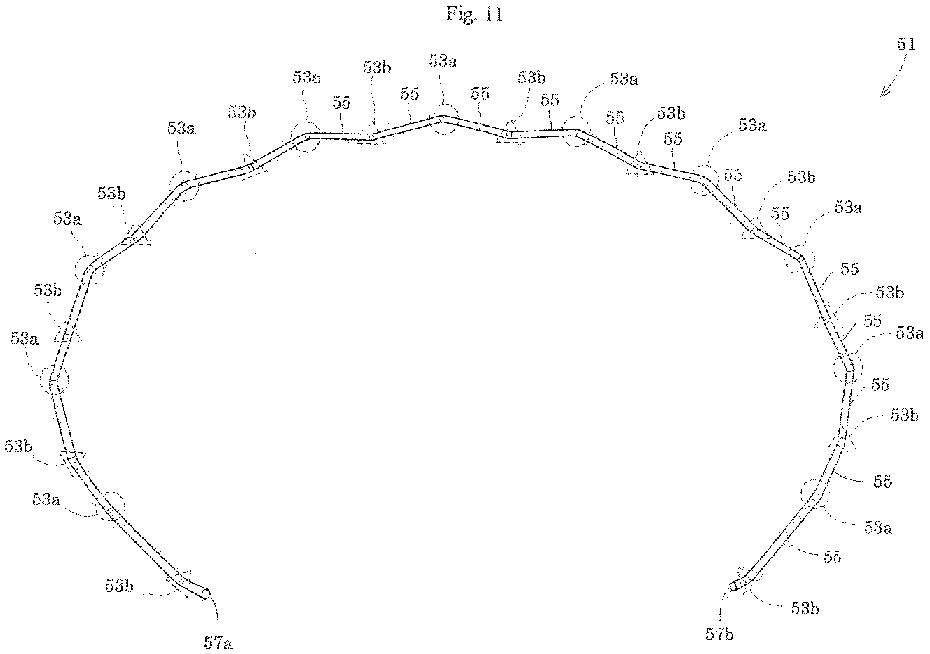

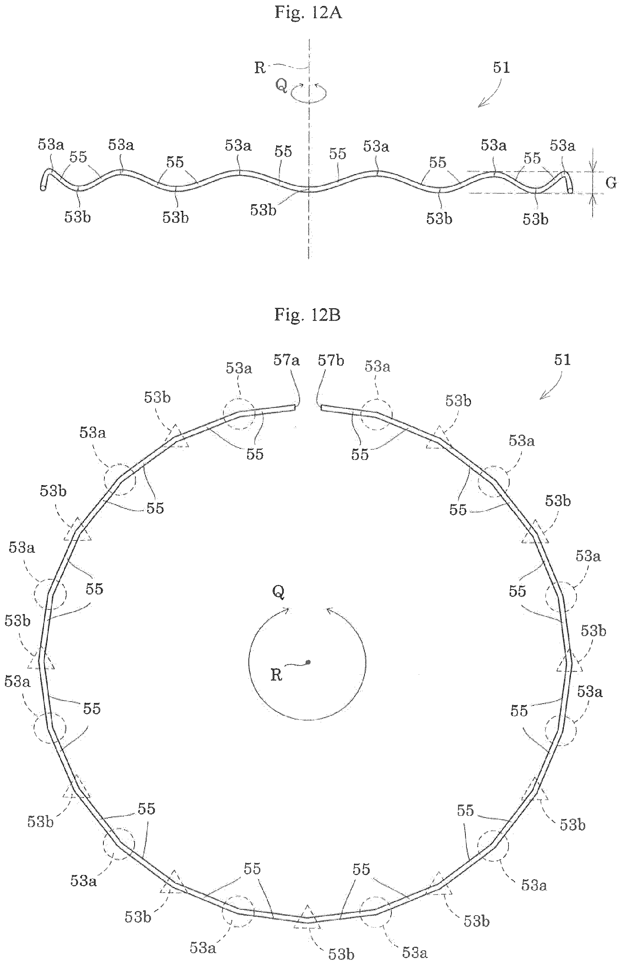

Reference is now made to Figure 11. Figure 11 is a perspective view of the bent wire rod 51. Figure 12A is a partial side view of the bent wire rod 51 seen from a direction orthogonal to the axis R, and Figure 12B is a plan view of the bent wire rod 51 seen along the axis R. Figure 11 illustrates a bent wire rod 51 not compressingly deformed, whereas Figure 12 illustrates a bent wire rod 51 compressingly deformed between the cover 5 and the stator 13.

The bent wire rod 51 is composed of a single wire rod. The wire rod preferably has a cross-section of circular or substantially circular shape. The wire rod is preferably made of a metal such as stainless steel. Examples of the wire rod include round steel, a round wire rod, a steel wire, and a round bar. The bent wire rod 51 is shaped by bending the wire rod as mentioned above. Consequently, the bent wire rod 51 is composed of a portion of bending the wire rod and/or a portion of extending the wire rod linearly.

Reference is made to Figure 12A. The bent wire rod 51 includes projections 53a and depressions 53b arranged alternately and successively, the projections 53a being bent to project upward along the axis R and the depressions 53b being bent to project downward along the axis R. Consequently, when seen in the peripheral direction Q around the axis R, the bent wire rod 51 has a zigzag or a wavy shape. The projections 53a and depressions 53b are preferably arranged at substantially regular intervals.

Reference is made to Figure 12B. The projections 53a and the depressions 53b are also bent such that the bent wire rod 51 has a substantially polygonal outer shape with the projections 53a and the depressions 53b as vertices when seen along the axis R. Figures 11 and 12B clearly illustrate the projections 53a surrounded by circles and the depressions 53b surrounded by triangles. As a result, the projection 53a and the depression 53b according to the embodiment of this invention also correspond to the corner of this invention.

A straight portion 55 is formed between the adjacent projection 53a and depression 53b. The bent wire rod 51 includes ends 57a and 57b. Accordingly, the bent wire rod 51 has a substantially polygonal shape having a portion partially opened when seen along the axis R. Figure 12B illustrates the bent wire rod 51 shaped to be equilateral icositetragon when seen along the axis R. With the open portion, the total number of the projection 53a and the depression 53b as vertices is twenty-three.

The bent wire rod 51 having the above shape is compressingly deformable along the axis R. When compressingly deformed along the axis R, the bent wire rod 51 extends along the axis R to exert an elastic force to cause the bent wire rod 51 to return to its original shape.

As noted above, the bent wire rod 51 has the substantially polygonal outer shape with only all of the projections 53a and depressions 53b as vertices, and no portion other than the projection 53a and depression 53b forms a vertex. Consequently, the bent wire rod 51 has essentially a uniform shape regardless of an upside-down rotation. Accordingly, a portion projecting in one direction along the axis R may serve as a projection 53a or a depression 53b. This allows reducing the work loads of assembling the bent wire rod 51.

The bent wire rod 51 has an opened portion at the ends 57a and 57b, and thus is compressingly deformable inwardly and radially relative to the axis R so as to have a smaller outer shape. When compressingly deformed radially and inwardly, the bent wire rod 51 generates an elastic force causing the bent wire rod 51 to expand radially and outwardly to cause the bent wire rod 51 to return to its original shape.

The bent wire rod 51 is formed in advance to be a polygon having a larger dimension than the external diameter of the stator 13 when seen along the axis R. This allows the bent wire rod 51 to contact the peripheral edge 38a of the stator 13. In the embodiment of this invention, the bent wire rod 51 is formed in advance to be a polygon having a dimension larger than the internal diameter of the side wall 41.

### 7. Stator Fixation Structure with the Bent Wire Rod

The stator 13 is fixed by the bent wire rod 51 as mentioned below. Specifically, as illustrated in Figure 10, the bent wire rod 51 is disposed along the side wall 41 of the cover 5 while being compressed to have a smaller outer shape. This causes the bent wire rod 51 to generate a radially outward elastic force by which the bent wire rod 51 expands across the entire periphery of the side wall 41. The bent wire rod 51 itself rests on the side wall 41 so as not to disconnect from the cover 5 under its own weight.

The cover 5 on which the bent wire rod 51 rests is fastened to the housing 3. Consequently, as illustrated in Figures 6 and 7, the bent wire rod 51 (the depressions 53b) contacts the peripheral edge 38a of the stator core 31. The bent wire rod 51 (the projections 53a) contacts the protrusion 45 along the side wall 41. The bent wire rod 51 is compressingly deformable along the axis R. The compressingly deformed bent wire rod 51 exerts an elastic force along the axis R. The protrusion 45 receives an elastic force upward along the axis R generated by the bent wire rod 51. The stator 13 receives an elastic force downward along the axis R generated by the bent wire rod 51. More specifically, the stator core 31 receives an elastic force distributed by all of the depressions 53b. As a result, the lower surface of the stator core 31 is pressed against the flange 24 of the tubular section 11, resulting in a suppression of a shifting of the stator 13 along the axis R.

As noted above, the stator 13 is fixed by merely attaching the bent wire rod 51 to the cover 5 and coupling the cover 5 to the housing 3. Coupling the cover 5 to the housing 3 allows the bent wire rod 51 to be compressingly deformed at one stroke in a given position to fix the stator 13 to the housing 3. This achieves fixation of the stator 13 in a shorter period of time with high efficiency.

Moreover, the bent wire rod 51 is elasticity deformable. Consequently, a variation in the dimension of the stator 13 or the cover 5 along the axis R may be absorbed to press the stator 13 against the tubular section 11 suitably.

Fixing the stator 13 by the combination of the spring pin 15 mentioned above and the bent wire rod 51, the driving unit 1 according to the embodiment of this invention further allows to suppress shifting of the stator 13 along the axis R.

Both the ends 57a and 57b of the bent wire rod 51 are designed not to project beyond the projections 53a and the depressions 53b along the axis R when the bent wire rod 51 is compressingly deformed along the axis R as noted above. Specifically, as illustrated in Figure 12A, assuming that an area between the projections 53a and the depressions 53b along the axis R is an area G, the ends 57a and 57b are always located within the area G. For instance, it is preferable that a distance from the end 57a to the projection 53a or the depression 53b nearest to the end 57a is shorter than the length of a straight portion 55 between a projection 53a and a depression 53b being adjacent. It is more preferable that the distance is one third the length of the straight portion 55.

Thus, the bent wire rod 51 prevents the ends 57a and 57b thereof from contacting the top face 38 of the stator core 31 and the protrusion 45 of the cover 5. Consequently, this allows suppressing variations in the elastic force of the bent wire rod 51 along the axis R.

In addition, the ends 57a and 57b of the bent wire rod 51 fail to contact each other when the bent wire rod 51 is compressingly deformed radially as mentioned above. Consequently, the elastic force of the bent wire rod 51 can be prevented from varying along the axis R and/or radially. If the ends 57a and 57b contact each other, a property of the bent wire rod 51 as an elastic body (a relationship between load and an elastic force) varies.

Moreover, the protrusion 45 is inclined downwardly along the axis R radially and inwardly. Consequently, the bent wire rod 51 is not able to move radially and inwardly unless the bent wire rod 51 itself is further contracted. Thus, the protrusion 45 allows suppressing radial shifting of the contact position of the bent wire rod 51 and the cover 5 suitably. In other words, radial and inward shifting of the projection 53a of the bent wire rod 51 may be suppressed suitably.

Moreover, the collar 36 of the insulated bobbin 35 has a dimension slightly smaller than the external diameter of the stator core 31, and thus the top face 38 of the stator core 31 (peripheral edge 38a) is exposed. This causes the bent wire rod 51 to directly contact the top face 38 of the stator core 31 having relatively high rigidity. Consequently, the bent wire rod 51 allows the elastic force to act on the stator 13 accurately, allowing the stator 13 to receive the elastic force stably.

As clearly illustrated in Figure 6, the collar 36 extends adjacent to the outer peripheral edge 39 of the stator core 31. Accordingly, the collar 36 allows suppressing a radial shifting of the contact position of the bent wire rod 51 to the stator 13 suitably. In other words, the collar 36 allows suppressing the shifting of the depressions 53b of the bent wire rod 51 suitably. In addition, the collar 36 is integrated with the insulated bobbin 35, achieving a simplification of the structure.

Moreover, the bent wire rod 51 is composed of a wire rod, and, thus, may be disposed suitably within a narrow and annular area, such as the peripheral edge 38a of the stator 13. Accordingly, a reduction in size of the stator 13 and the cover 5 may be achieved. In addition, the bent wire rod 51 may be formed by bending the wire rod, and thus no mold such as press dies is required, resulting in low costs for the production.

The bent wire rod 51 has an outer shape of a polygon having many vertices seen along the axis R. Accordingly, the bent wire rod 51 may extend suitably along the circumferential surface formed by the side wall 41. Moreover, many depressions 53b of the bent wire rod 51 lead to a decreased pressure of one depression 53b against the stator 13. In addition, the elastic force may be distributed to act to the stator 13.

Moreover, the spring pin 15 does not project over the stator 13, thereby suppressing an interference between the spring pin 15 and the bent wire rod 51.

Moreover, the side wall 41 has the internal diameter slightly larger than the external diameter of the stator 13, and, thus, the stator 13 (stator core 31) projecting from the tubular section 11 may be accommodated inside the side wall 41. As noted above, the upper portion of the stator 13 is partially accommodated in the cover 5, facilitating a reduction in size of the driving unit 1.

### 9. Exemplary Application to the Bicycle

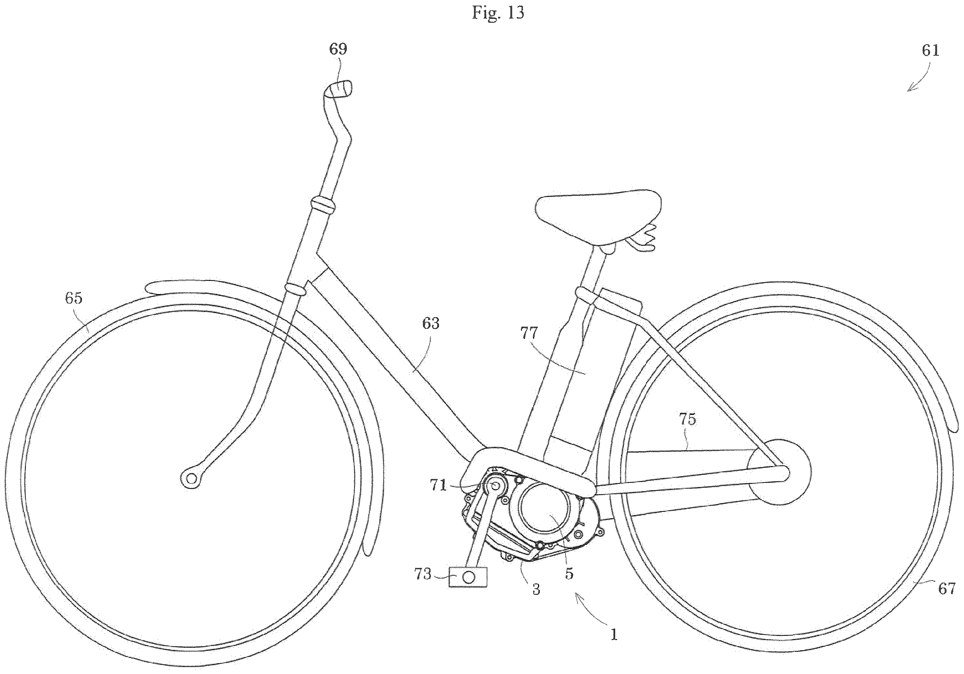

Next, a description of an exemplary application of the driving unit 1 according to the embodiment of this invention to a bicycle will be given. Figure 13 is a left side view of a bicycle 61 with the driving unit 1 mounted thereon. The bicycle 61 includes a body frame 63, a front wheel 65 and a rear wheel 67 rotatably supported on the body frame 63, and a handle 69 supported on the body frame 63 and steering the front wheel 65.

The driving unit 1 is supported on the body frame 63 around the lower middle portion of the bicycle 61. The driving unit 1 is provided such that the axis R is substantially horizontal. The driving unit 1 includes a crankshaft 71 passing therethrough substantially horizontally. The crankshaft 71 has pedals 73 coupled thereto on both ends thereof. Pressure on the pedals 73 causes the crankshaft 71 to rotate. The rotary power of the crankshaft 71 is transmitted to the rear wheel 67 via a chain 75. In addition, the body frame 63 includes a battery 77 supported thereon. The battery 77 drives the motor 18 composed of the stator 13 and the like.

Reference is now made to Figure 3. The crankshaft 71 is inserted into the crankshaft chamber 72 of the driving unit 1. The crankshaft chamber 72 also includes a torque sensor (not shown) that detects a torque of the crankshaft 71, and a controller (not shown) that controls the motor 18. Power from the motor 18 is output to an output shaft 20. The rotary power from the output shaft 20 may be transmitted to the rear wheel 67 via the chain 75 mentioned above.

The controller controls the motor 18 in accordance with detection results from the torque sensor. The motor 18 generates auxiliary power in accordance with the pressure on the pedals 73. The pressure and the power from the motor 18 are transmitted to the chain 75 via the crankshaft 71 and the output shaft 20, respectively. The chain 75 combines the pressure and the power to transmit the combined pressure and power to the rear wheel 67. This causes the bicycle 61 to move.

In the bicycle 61, the pedals 73, sometimes, may contact the ground. The pedals 73 are coupled to the crankshaft 71. Accordingly, in general, the surface of the driving unit (the outer surface of the housing) of the bicycle 61 may undergo a direct shock, or the interior of the driving unit (crank chamber) may undergo a direct shock through the crankshaft. When the shock is directly transmitted to the inside of the driving unit, a stronger force is transmitted to the stator along the axis R. On the other hand, in the driving unit 1 according to the embodiment of this invention, the fixation structure mentioned above of the stator 13 is used, and this allows suitably suppressing the shifting of the stator 13 along the axis R. Consequently, the driving unit 1 according to the embodiment of this invention is suitable for the application to the bicycle 61.

This invention is not limited to the above embodiments, but may be modified as follows.
(1) An embodiment mentioned above uses both fixation of the stator 13 by the bent wire rod 51 and that of the stator 13 by the spring pin 15. However, the invention is not limited to such an embodiment. Specifically, in accordance with an embodiment the spring pin 15 may be omitted.
(2) In an embodiment mentioned above, the shape of the bent wire rod 51 seen along the axis R is an equilateral icositetragon as one example In an example not part of the invention, the number of vertices of the polygon may be selected and varied as appropriate. For instance, the polygon may be duodecagonal or more. In addition, the shape is not limited to be an equilateral polygon, but may be a polygon other than this. Alternatively, the shape may be a circle, an ellipse or the like.
(3) In an embodiment mentioned above, the bent wire rod 51 has a substantially polygonal shape when seen along the axis R with the projections 53a and the depressions 53b only as vertices. However, the invention is not limited to such an embodiment. For instance, assuming that a portion corresponding to the vertex of the polygon is a corner, the corner may be provided in addition to the projections 53a and the depressions 53b. In other words, the corners may be disposed at a position different from positions of the projections 53a and the depressions 53b. Alternatively, the projections 53a and the depressions 53 may partially serve as the corner. In this case, a corner may also be provided in addition to the projections 53a and the depressions 53.
   In addition, one of the projection 53a and depression 53b may serve as a corner, and the other does not serve as a corner. For instance, each of the corners may be formed together with the projection 53a and not with the depression 53b. In this case, when seen the bent wire rod 51 along the axis R, the depression 53b is disposed between the adjacent vertices (corners) of a substantial polygon (i.e., around the center of each side of the polygon).
(4) In an embodiment mentioned above, the bent wire rod 51 allows generating an elastic force radially and outwardly. However, the invention is not limited to such an embodiment. Specifically, the bent wire rod may be modified as appropriate to generate no elastic force radially and outwardly.
(5) In an embodiment mentioned above, the bent wire rod 51 is composed of a wire rod having a circular cross-section, but is not limited to this. For instance, the bent wire rod may be modified to be composed of a wire rod having a rectangular cross-section.
(6) In an embodiment mentioned above, the bent wire rod 51 rests on the cover 5 (side wall 41), but is not limited to this embodiment. For instance, the bent wire rod 51 may rest on the tubular section 11. Alternatively, the bent wire rod 51 may rest on the stator 13.
(7) In an embodiment mentioned above, the contact position of the bent wire rod 51 and the stator 13 is at the peripheral edge 38a of the stator core 31. However, in an embodiment not part of the invention, the contact position may be another position of the stator core 31. In addition, the bent wire rod 51 may contact an element of the stator 13 other than the stator core 31 (e.g., the insulated bobbin 35 or the coil 37).
(8) In an embodiment mentioned above, the protrusion 45 is inclined, but is not limited to this embodiment. Specifically, the protrusion 45 may project in a horizontal direction radially and inwardly relative to the axis R.
(9) In an embodiment mentioned above, the collar 36 restricting radial and inward shifting of the bent wire rod 51 is integrated with the insulated bobbin 35. However, the invention is not limited to such an embodiment. Specifically, a restricting element restricting radial and inward shifting of the bent wire rod 51 may be provided in addition to the insulated bobbin 35.
(10) An embodiment mentioned above has described the driving unit 1 applicable to the bicycle, but is not limited to this embodiment. Alternatively, the driving unit 1 may be applied to any other device. The crankshaft chamber 72 may be omitted in such an embodiment.
(11) In an embodiment mentioned above, the stator 13 has been described as one example of an element of the motor 18, but is not limited to this embodiment. For instance, in an embodiment of this invention the stator 13 constitutes part of a generator.

### Reference Signs List

- 1 ...: driving unit
- 3 ...: housing
- 5 ...: cover
- 11 ...: tubular section
- 13 ...: stator
- 15 ...: spring pin
- 16 ...: rotor
- 18 ...: motor
- 24 ...: flange
- 31 ...: stator core
- 32 ...: outer wall
- 35 ...: insulated bobbin
- 36 ...: collar
- 37 ...: coil
- 38 ...: top face
- 38a ...: peripheral edge
- 39 ...: outer peripheral edge
- 41 ...: side wall
- 45 ...: protrusion
- 51 ...: bent wire rod
- 53a ...: projection (serving as a corner)
- 53b ...: depression (serving as a corner)
- 55 ...: straight portion
- 57a, 57b ...: end
- 61 ...: bicycle
- 71 ...: crankshaft
- 72 ...: crankshaft chamber
- 73 ...: pedal
- G ...: area
- H ...: recess (space)
- Q ...: peripheral direction
- R ...: axis of a stator
- S ...: shaft axis of a spring pin
- V ...: direction from a shaft axis of a spring pin toward an axis of a stator

## Claims

1. A stator structure, comprising:
a stator (13);
a housing (3) including a tubular section (11), the stator (13) being accommodated in the tubular section (11);
a cover (5) coupled to the housing (3) for blocking an upper opening of the tubular section (11); and
a bent wire rod (51) composed of a wire for pressing the stator (13) against the tubular section (11), the bent wire rod (51) being in contact with a top face (38) of the stator (13) and a rear face of the cover (5) in a compressed state so as to be deformed along an axis (R) substantially conforming to the central axis of the tubular section (11),
the bent wire rod (51) having a substantially annular shape with an opened portion when seen along the axis (R), and including projections (53a) projecting upward along the axis (R) and depressions (53b) projecting downward along the axis (R), the projections (53a) and depressions (53b) being arranged alternately and successively, the bent wire rod (51) being arranged such that the projections (53a) are in contact with the rear face of the cover (5) and the depressions (53b) are in contact with the top face (38) of the stator (13),
the stator (13) includes a stator core (31) and a coil (37) wound around the stator core (31),
the bent wire rod (51) contacts a top face (38) of the stator core (31) directly, and
the stator (13) further includes a restricting element (36) disposed on the top face (38) of the stator core (31) and inside from an outer peripheral edge of the stator core (31) for restricting shifting of the bent wire rod (51) radially and inwardly.

2. The stator structure according to claim 1, wherein
the stator (13) further includes an insulated bobbin (35) disposed between the stator core (31) and the coil (37) for covering the stator core (31), and
the restricting element (36) is integrated with the insulated bobbin (35).

3. A driving unit, comprising:
a motor (18) configured to generate power, the motor (18) including a rotor (16) and a stator (13) outside of the rotor (16); and
a stator structure according to any of claims 1 to 2.

4. The driving unit according to claim 3, wherein
the driving unit is mountable on a bicycle (61),
the housing (3) further includes a crankshaft chamber (72) into which a crankshaft (71) of the bicycle (61) is inserted, and
the motor (18) is configured to generate power for assisting a pressure on pedals (73) coupled to the crankshaft (71).

5. A bicycle (61) comprising a body frame (63), a front wheel (65) and a rear wheel (67) rotatably supported on the body frame (63), and a handle (69) supported on the body frame (63) and configured for steering the front wheel (65), the bicycle (61) further comprising the driving unit according to claim 3 or 4.

## Patentansprüche

1. Eine Statorstruktur, die folgende Merkmale aufweist:
einen Stator (13);
ein Gehäuse (3), das ein röhrenförmiges Segment (11) umfasst, wobei der Stator (13) in dem röhrenförmigen Segment (11) untergebracht ist;
eine Abdeckung (5), die mit dem Gehäuse (3) gekoppelt ist, zum Blockieren einer oberen Öffnung des röhrenförmigen Segments (11); und
eine gebogene Drahtstange (51), die aus einem Draht gebildet ist, zum Drücken des Stators (13) gegen das röhrenförmige Segment (11), wobei die gebogene Drahtstange (51) in einem zusammengedrückten Zustand in Kontakt mit einer oberen Fläche (38) des Stators (13) und einer hinteren Fläche der Abdeckung (5) ist, um entlang einer Achse (R) verformt zu sein, die im Wesentlichen der Mittelachse des röhrenförmigen Segments (11) entspricht,
wobei die gebogene Drahtstange (51) bei Betrachtung entlang der Achse (R) eine im Wesentlichen ringförmige Form mit einem geöffneten Abschnitt aufweist und Überstände (53a), die entlang der Achse (R) nach oben vorstehen, und Vertiefungen (53b), die entlang der Achse (R) nach unten vorstehen, umfasst, wobei die Überstände (53a) und Vertiefungen (53b) abwechselnd und nacheinander angeordnet sind, wobei die gebogene Drahtstange (51) derart angeordnet ist, dass die Überstände (53a) in Kontakt mit der hinteren Fläche der Abdeckung (5) sind und die Vertiefungen (53b) in Kontakt mit der oberen Fläche (38) des Stators (13) sind,
wobei der Stator (13) einen Statorkern (31) und eine Spule (37) umfasst, die um den Statorkern gewickelt ist (31),
die gebogene Drahtstange (51) eine obere Fläche (38) des Statorkerns (31) direkt berührt, und der Stator (13) ferner ein Begrenzungselement (36), das auf der oberen Fläche (38) des Statorkerns (31) und innerhalb eines Außenumfangsrand des Statorkerns (31) angeordnet ist, um ein Verschieben der gebogenen Drahtstange (51) radial und nach innen zu begrenzen, umfasst.

2. Die Statorstruktur gemäß Anspruch 1, wobei
der Stator (13) ferner einen isolierten Spulenkörper (35), der zwischen dem Statorkern (31) und der Spule (37) angeordnet ist, zum Bedecken des Statorkerns (31) umfasst, und
das Begrenzungselement (36) in den isolierten Spulenkörper (35) integriert ist.

3. Eine Antriebseinheit, die folgende Merkmale aufweist:
einen Motor (18), der zum Erzeugen von Leistung konfiguriert ist, wobei der Motor (18) einen Rotor (16) und einen Stator (13) außerhalb des Rotors (16) umfasst; und
eine Statorstruktur gemäß einem der Ansprüche 1 bis 2.

4. Die Antriebseinheit gemäß Anspruch 3, wobei
die Antriebseinheit an einem Zweirad (61) befestigt werden kann,
das Gehäuse (3) ferner eine Kurbelwellenkammer (72) umfasst, in die eine Kurbelwelle (71) des Zweirads (61) eingesetzt ist, und
der Motor (18) zum Erzeugen von Leistung konfiguriert ist, um einen Druck auf Pedale (73), die mit der Kurbelwelle (71) gekoppelt sind, zu unterstützen.

5. Ein Zweirad (61), das einen Karosserierahmen (63), ein Vorderrad (65) und ein Hinterrad (67), die auf dem Karosserierahmen (63) drehbar gelagert sind, und einen Haltegriff (69) aufweist, der an dem Karosserierahmen (63) gelagert ist und dazu konfiguriert ist, das Vorderrad (65) zu steuern, wobei das Zweirad (61) ferner die Antriebseinheit gemäß Anspruch 3 oder 4 aufweist.

## Revendications

1. Structure de stator, comprenant:
un stator (13);
un boîtier (3) comportant un segment tubulaire (11), le stator (13) étant logé dans le segment tubulaire (11);
un couvercle (5) couplé au boîtier (3), destiné à bloquer une ouverture supérieure du segment tubulaire (11); et
un fil machine courbé (51) composé d'un fil destiné à presser le stator (13) contre le segment tubulaire (11), le fil machine courbé (51) étant en contact avec une face supérieure (38) du stator (13) et une face arrière du couvercle (5) dans un état comprimé, de manière à se déformer le long d'un axe (R) sensiblement conforme à l'axe central du segment tubulaire (11),
le fil machine courbé (51) présentant une forme sensiblement annulaire avec une partie ouverte, lorsque vue le long de l'axe (R), et comportant des saillies (53a) faisant saillie vers le haut le long de l'axe (R) et des creux (53b) faisant saillie vers le bas le long de l'axe (R), les saillies (53a) et les creux (53b) étant disposés alternativement et successivement, le fil machine courbé (51) étant disposé de sorte que les saillies (53a) soient en contact avec la face arrière du couvercle (5) et que les creux (53b) soient en contact avec la face supérieure (38) du stator (13),
le stator (13) comporte un noyau de stator (31) et une bobine (37) enroulée autour du noyau de stator (31),
le fil machine courbé (51) entre directement en contact avec une face supérieure (38) du noyau de stator (31), et
le stator (13) comporte par ailleurs un élément de limitation (36) disposé sur la face supérieure (38) du noyau de stator (31) et à l'intérieur par rapport à un bord périphérique extérieur du noyau de stator (31) pour limiter le déplacement du fil machine courbé (51) radialement et vers l'intérieur.

2. Structure de stator selon la revendication 1, dans laquelle
le stator (13) comporte par ailleurs une bobine isolée (35) disposée entre le noyau de stator (31) et la bobine (37) pour recouvrir le noyau de stator (31), et
l'élément de limitation (36) est intégré à la bobine isolée (35).

3. Groupe moteur, comprenant:
un moteur (18) configuré pour générer de l'énergie, le moteur (18) comportant un rotor (16) et un stator (13) à l'extérieur du rotor (16); et
une structure de stator selon l'une quelconque des revendications 1 à 2.

4. Groupe moteur selon la revendication 3, dans lequel le groupe moteur peut être monté sur une bicyclette (61),
le boîtier (3) comporte par ailleurs une chambre de vilebrequin (72) dans laquelle est inséré un vilebrequin (71) de la bicyclette (61), et
le moteur (18) est configuré pour générer de l'énergie pour assister une pression sur les pédales (73) couplées au vilebrequin (71),

5. Bicyclette (61) comprenant un cadre de carrosserie (63), une roue avant (65) et une roue arrière (67) supportées de manière rotative sur le cadre de carrosserie (63), et une poignée (69) supportée sur le cadre de carrosserie (63) et configurée pour diriger la roue avant (65), la bicyclette (61) comprenant par ailleurs le groupe moteur selon la revendication 3 ou 4.
